(19) Europäisches Patentamt
European Patent Office
Office européen des brevets

(11) Veröffentlichungsnummer: **0 003 986**
**B1**

# (12) EUROPÄISCHE PATENTSCHRIFT

(45) Veröffentlichungstag der Patentschrift: **08.05.85**

(51) Int. Cl.⁴: **C 08 F 212/12**

(21) Anmeldenummer: **79100473.2**

(22) Anmeldetag: **19.02.79**

## (54) Verfahren zur kontinuierlichen Herstellung von Copolymerisaten aus Alpha-Methylstyrol und Acrylnitril in einer Reaktionszone.

(30) Priorität: **03.03.78 DE 2809180**

(43) Veröffentlichungstag der Anmeldung: **19.09.79 Patentblatt 79/19**

(45) Bekanntmachung des Hinweises auf die Patenterteilung: **08.05.85 Patentblatt 85/19**

(84) Benannte Vertragsstaaten: **BE DE FR GB NL**

(56) Entgegenhaltungen:
**DE - A - 2 619 969**
**GB - A - 778 035**
**US - A - 3 268 625**

(73) Patentinhaber: **BASF Aktiengesellschaft, Carl-Bosch-Strasse 38, D-6700 Ludwigshafen (DE)**

(72) Erfinder: **Gausepohl, Hermann, Dr., Neuweg 10, D-6704 Mutterstadt (DE)**
Erfinder: **Reffert, Rudi Wilhelm, Berliner Strasse 18, D-6711 Beindersheim (DE)**
Erfinder: **Wild, Hans, Dr., Hildenbrandstrasse 1, D-6710 Frankenthal (DE)**
Erfinder: **Echte, Adolf, Dr., Leuschnerstrasse 42, D-6700 Ludwigshafen (DE)**

EP 0 003 986 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur kontinuierlichen Herstellung von Copolymerisaten aus $\alpha$-Methylstyrol und Acrylnitril in Lösung unter Verwendung von eine Azogruppierung enthaltenden Initiatoren.

Die radikalische Polymerisation von Acrylnitril mit vinylaromatischen Verbindungen wie Styrol, $\alpha$-Methylstyrol, Vinyltoluol und dergleichen ist bekannt. Es ist ferner bekannt, Copolymerisate von Styrol und Acrylnitril unter Verwendung radikalischer Initiatoren herzustellen (vgl. die DE-OS 2 361 743 sowie 2 614 674 und 2 619 969).

In der GB-PS 778 035 ist die Herstellung von homogenen, transparenten Copolymerisaten aus Styrol und Acrylnitril unter Verwendung bestimmter, Hydroxylgruppen enthaltender Lösungsmittel, insbesondere von Alkoholen und unter Verwendung wasserlöslicher Suspensionsmittel beschrieben.

In der US-PS 3 268 625 wird ein diskontinuierliches Masse-Polymerisationsverfahren von $\alpha$-Alkylstyrolen und Acrylnitril in Gegenwart von Initiatoren beschrieben, das in mehreren Reaktionsstufen durchgeführt wird und zu dessen Durchführung eine periodische Nachdosierung von Monomeren und Initiator in der Vorpolymerisationsstufe erforderlich ist.

Außerdem ist die Polymerisation von $\alpha$-Methylstyrol zusammen mit Acrylnitril in Makromolekulare Chemie, 103, 188 (1967) beschrieben.

Ein allgemeiner Nachteil der Polymerisationsverfahren, gleichgültig, ob die Polymerisation thermisch oder mit radikalisch zerfallenden Initiatoren durchgeführt wird, besteht darin, daß die Raum-Zeit-Ausbeuten sehr niedrig sind.

Durch eine Erhöhung der Initiatorkonzentration läßt sich zwar die Raum-Zeit-Ausbeute steigern; dabei wird aber das mittlere Molekulargewicht des Polymerisats und somit auch das mechanische Niveau des Polymerisats herabgesetzt. Dasselbe Resultat erzielt man bei der Erhöhung der Temperatur einer thermischen Polymerisation. Aus der DE-OS 2 619 969 ist es schon bekannt, Copolymerisate aus einem monovinylaromatischen Monomeren und Acrylnitril, die eine bessere thermische Beständigkeit und einen geringen Gehalt an Restmonomeren (Acrylnitril) besitzen, herzustellen. Nach Ausweis der Beispiele wird Styrol und Acrylnitril unter Verwendung von peroxidischen Initiatoren, nämlich 1,1-Bis-(tert.-butylperoxy)-cyclohexan (BPC) bei Temperaturen umgesetzt, bei denen der Initiator eine Halbwertszeit von ungefähr 1 Stunde besitzt. Es wurde festgestellt, daß dabei ein Copolymerisat mit einer hohen Formbeständigkeit in der Wärme und einem niedrigen Rest-Acrylnitrilgehalt erhältlich ist, das eine hohe Verarbeitungsgeschwindigkeit ermöglicht.

Es war nun überraschend, daß bei Verwendung von eine Azogruppierung enthaltender Initiatoren bei der Umsetzung von Mischungen aus $\alpha$-Methylstyrol und Acrylnitril unter ganz bestimmten Bedingungen der Temperatur sich die Raum-Zeit-Ausbeute drastisch erhöhen läßt, wobei gleichzeitig ein wenig verfärbtes Polymerisationsprodukt mit guten mechanischen Eigenschaften und guter Wärmebeständigkeit erhalten wird (vgl. Tabelle 2, Versuch 3 mit Versuch 2).

Die Erfindung betrifft somit ein Verfahren zur kontinuierlichen Herstellung von Copolymerisaten, enthaltend Monovinylaromaten und Acrylnitril als wesentliche Monomere, durch Umsetzung des Gemisches der Monomeren in Lösung in einer Reaktionszone in Gegenwart von radikalisch zerfallenden, monomerlöslichen, eine Azogruppierung enthaltenden Initiatoren bei erhöhter Temperatur, erhöhtem Druck und unter Rühren. Das Verfahren ist dadurch gekennzeichnet, daß $\alpha$-Methylstyrol als Monovinylaromat unter solchen Bedingungen mit Initiatoren umgesetzt wird, daß die Halbwertszeit des radikalischen Zerfalls der Initiatoren $<30$ Minuten ist und die Copolymerisate 65 bis 77 Gew.-% $\alpha$-Methylstyroleinheiten und 35 bis 23 Gew.-% Acrylnitrileinheiten enthalten und wobei die Polymerisation bis zu Umsätzen von 50 bis 60% geführt wird.

Das erfindunsgemäße Verfahren erlaubt Produkte herzustellen, die im Gegensatz zu den bei Peroxidanwendung erhaltenen bekannten Polymerisaten nur schwach verfärbt sind. Außerdem wird es möglich, die Raum-Zeit-Ausbeute bei der Polymerisation zu erhöhen, ohne die Eigenschaften der Polymerisate durch irgendwelche Zusätze zu verändern, wie es bereits bekannt ist, z. B. durch Zusatz bifunktioneller Verbindungen zu Vinylmonomeren (vgl. US-PS 2 677 674).

Als monovinylaromatisches Monomeres für die Umsetzung mit Acrylnitril kommt $\alpha$-Methylstyrol in Betracht.

Bei der Polymerisation wird $\alpha$-Methylstyrol in solchen Mengen angewendet, daß das Copolymer 65 bis 77 Gew.-% $\alpha$-Methylstyroleinheiten aufweist. Besonders bevorzugt sind Copolymerisate, die $\alpha$-Methylstyrol im Bereich von 68 bis 72 Gew.-% aufweisen (Rest jeweils Acrylnitril). Bei Verwendung von größeren Mengen an Acrylnitril verschlechtert sich ganz allgemein die Farbe bzw. die thermische Stabilität des Copolymeren. Bei Acrylnitrilgehalten von unter 23 Gew.-% verschlechtern sich dagegen die mechanischen Eigenschaften des Copolymerisats.

Das erfindungsgemäße Verfahren wird in einer Reaktionszone kontinuierlich unter Rühren durchgeführt. Es handelt sich um ein an sich bekanntes Verfahren, das von der Polymerisation des Styrols bzw. der Copolymerisation des Styrols mit anderen copolymerisierbaren Monomeren bekannt ist. Dieses Verfahren wird in Lösung durchgeführt. Für die Lösungspolymerisation kommen unpolare organische Lösungsmittel, wie Toluol, Xylol, Ethylbenzol oder polare Verbindungen, wie Dimethylformamid, Dioxan, THF oder Methyläthylketon in Betracht. Von den genannten Lösungsmitteln ist die Anwendung

von Ethylbenzol oder von Methylethylketon aus der Gruppe der polaren Lösungsmittel bevorzugt. Es ist lediglich zu beachten, daß bei Anwendung zu hoher Mengen an Lösungsmitteln die Raum-Zeit-Ausbeute sinkt, während bei Anwendung geringerer Mengen an Lösungsmittel die Wärmeabfuhr erschwert sein kann. Die angewandten Drücke liegen in der Regel oberhalb von 1 bar.

Für das erfindungsgemäße Verfahren kommen Azogruppen enthaltende Initiatoren in Betracht. Beispielsweise seien genannt: Azodiisobutyronitril (AIBN) sowie 2,2'-Azobis-(2,4-dimethyl-4-methoxyvalero-nitril) und ein anderes Derivat des gleichen Grundkörpers, das 2,2'-Azobis(2,4-dimethylvaleronitril). Diese Verbindungen haben die nachstehend genannte Konfiguration I bzw. II:

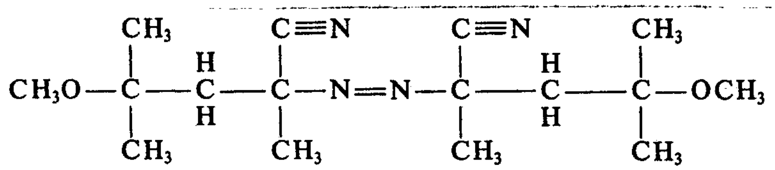
(I)

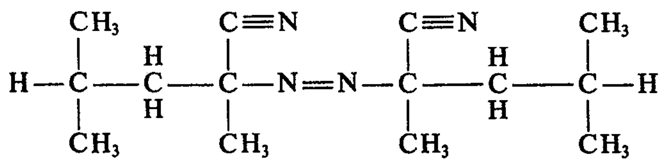
(II)

Ganz allgemein gilt für die Gruppe der Azostarter, daß sie beim erfindungsgemäßen Verfahren unter solchen Bedingungen angewendet werden, bei denen die Halbwertszeit des radikalischen Zerfalls $<30$ Minuten, insbesondere $<5$ Minuten beträgt.

Die Anwendung von AIBN ist bevorzugt. AIBN wird insbesondere bei Temperaturen oberhalb von 110° C und besonders bevorzugt bei Temperaturen oberhalb von 115° C angewendet.

Die Halbwertszeiten t1/2 von z. B. AIBN und der Verbindung der Struktur II sind in der Firmenschrift von AKZO, Ausgabe D 1.01.1 D/0974 (1974) in einer graphischen Darstellung angegeben. Die Werte werden an einer verdünnten Lösung gemessen. Einige Werte für diese beiden Verbindungen sind in der folgenden Tabelle wiedergegeben.

Tabelle 1

AIBN

| | | | | | |
|---|---|---|---|---|---|
| t1/2 (h) | 1 | 1/2 | 1/6 | 1/10 | 1/100 |
| °C | 82 | 88 | 97 | 101 | 123 |

Verbindung II

| | | | | | |
|---|---|---|---|---|---|
| t1/2 | 1 | 1/2 | 1/6 | 1/10 | 1/100 |
| °C | 65 | 70,5 | 80 | 85 | 107 |

Die Initiatoren werden nur oberhalb der Temperaturen von 88° C (AIBN) bzw. oberhalb von 70,5° C (Verbindung II) angewandt.

Die Initiatoren werden üblicherweise in Mengen von 0,01 bis 0,3 Gew.-%, bezogen auf die Monomeren bzw. die Monomerenmischung, angewendet. Insbesondere werden Mengen von $<0,15$ Gew.-% angewendet.

Bei der Durchführung des erfindungsgemäßen Verfahrens können Hilfsmittel, z. B. innere Gleitmittel, Entformungsmittel, Regler, Antistatika und dergleichen in üblichen, an sich bekannten Mengen verwendet werden.

Die in den folgenden Beispielen und Vergleichsbeispielen genannten Prozente beziehen sich auf das Gewicht. Die in den Beispielen und Vergleichsbeispielen genannten Parameter wurden nach folgenden Methoden bestimmt:

1. Die Streckspannung, gemessen nach DIN 53 455,
2. die Reißdehnung, gemessen nach DIN 53 455,
3. die Kerbschlagzähigkeit, gemessen nach DIN 53 453,
4. die Biegefestigkeit, gemessen nach DIN 53 452, und
5. die Viskositätszahl, gemessen nach DIN 53 726 (in Dimethylformamid).

Die Raum-Zeit-Ausbeute (RZA) schließlich besitzt die Dimension kg Produkt/Liter Reaktionsvolumen und Stunde (kg/l · h).

Beispiel 1

In den folgenden Versuchen wurde der Einfachheit wegen jeweils eine Mischung der Monomeren $\alpha$-Methylstyrol und Acrylnitril im Verhältnis 31,3% Acrylnitril und 63,8% $\alpha$-Methylstyrol angewendet, um Polymerisate mit azeotroper Zusammensetzung zu erhalten. Die Monomerenmischung wurde zusammen mit 4,9% Äthylbenzol (Versuch 1), 4,7% Äthylbenzol (Versuch 2) bzw. 4,75% Äthylbenzol (Versuch 3) und den in Tabelle 2 genannten Mengen an Initiator gemischt in einem kontinuierlich durchflossenem Rührkesselreaktor mit einem Füllvolumen von 12,8 l bei verschiedenen Temperaturen (vgl. Tabelle 2) und einem Druck von 10 bar polymerisiert.
Die Polymerisation wurde bis zu einem Umsatz von 50 bis 60% durchgeführt; die Polymerlösung wurde in einem Entgasungsextruder von den nicht umgesetzten Monomeren und dem Lösungsmittel befreit, als Schmelzfaden ausgetragen und granuliert. An Proben des Granulats wurde die Viskositätszahl bestimmt, während die RZA aus dem Feststoffgehalt der Polymerlösung berechnet wurde. Die RZA aller Versuche sind als RZA rel. auf den Wert 1,00 für Versuch 1 bezogen. Die Versuchsergebnisse sind in der Tabelle 2 wiedergegeben. Die Viskositätszahl ist in ml/g angegeben.

Tabelle 2

| | Temp., °C | AIBN, Gew.-% | RZA rel. | VZ |
|---|---|---|---|---|
| Versuch 1 | 125 | – | 1,00 | 56,5 |
| Versuch 2 | 82 | 0,2 | 0,90 | 55,0 |
| Versuch 3 | 105 | 0,15 | 1,65 | 57,3 |

Wie aus der Tabelle 2 ersichtlich ist, wird beim erfindungsgemäßen Verfahren (Versuch 3) eine höhere Raum-Zeit-Ausbeute erzielt als bei der rein thermisch durchgeführten Polymerisation (Versuch 1). Aber auch gegenüber der Versuchsdurchführung (vgl. Versuch 2) unter Zusatz von einem großen Anteil von Initiator und Durchführung des Verfahrens bei einer Temperatur von 82° C, die schon höher ist als die üblicherweise für den Initiator AIBN angewendete, erweist sich das erfindungsgemäße Verfahren als vorteilhaft. Die Halbwertszeit von 1 Stunde wird von AIBN bei 82° C erreicht. Somit ist Versuch 2, Tabelle 2, als Vergleichsversuch gegenüber der aus der zitierten DE-OS 2 619 969 bekannten Lehre zu werten. Die Ergebnisse, die in der Tabelle dargestellt sind, zeigen, daß nach dem erfindungsgemäßen Verfahren überraschenderweise erheblich höhere Raum-Zeit-Ausbeuten erhältlich sind.

Beispiel 2

In dem nachfolgenden Beispiel 2 wurde in den Versuchen 4, 5 und 6 ein Monomerengemisch aus 31,3% Acrylnitril und 63,8% $\alpha$-Methylstyrol und mit den in Tabelle 3 genannten Mengen an Äthylbenzol (ÄB) polymerisiert. Die zugegebene Menge an Initiator sowie die Polymerisationstemperatur ist zusammen mit der Raum-Zeit-Ausbeute und den Viskositätszahlen der erhaltenen Polymerisate ebenfalls in Tabelle 3 aufgeführt.

Tabelle 3

| Versuch | % ÄB | %AIBN | Temperatur | RZA rel. | VZ |
|---|---|---|---|---|---|
| 4 | 4,77 | 0,13 | 110 | 1,94 | 56,4 |
| 5 | 4,80 | 0,10 | 115 | 2,20 | 57,1 |
| 6 | 4,84 | 0,06 | 122 | 2,31 | 55,3 |

Aus Tabelle 3 ist ersichtlich, daß mit der Erhöhung der Polymerisationstemperatur der Anteil des Starters erniedrigt werden kann; dabei werden steigende Raum-Zeit-Ausbeuten erhalten, wobei sich das Molekulargewicht der erhaltenen Polymerisate nicht wesentlich ändert (ersichtlich aus der Viskositätszahl). Daß sich auch die mechanischen Eigenschaften der nach dem erfindungsgemäßen Verfahren erhaltenen Polymerisate nicht nachteilig verändern, geht aus der nachstehenden Tabelle 4 hervor, in die zur Veranschaulichung auch die Werte der Versuche 1 und 2, die nicht nach dem erfindungsgemäßen Verfahren durchgeführt worden sind, aufgenommen wurden.

Tabelle 4

| Versuch | $a_K$ (KJ/$m^2$) Kerbschlagzähigkeit | $_R$ (N/$mm^2$) Streckspannung | $_B$ (N/$mm^2$) Biegefestigkeit | $_R$ % Reißdehnung |
|---|---|---|---|---|
| 1 | 1,2 | 780 | 1350 | 4,8 |
| 2 | 1,1 | 775 | 1286 | 4,7 |
| 3 | 1,2 | 790 | 1330 | 4,7 |
| 4 | 1,0 | 790 | 1389 | 4,6 |
| 5 | 1,2 | 793 | 1410 | 4,7 |
| 6 | 1,1 | 798 | 1415 | 4,7 |

**Patentansprüche**

1. Verfahren zur kontinuierlichen Herstellung von Copolymerisaten, enthaltend Monovinylaromaten und Acrylnitril als wesentliche Monomere, durch Umsetzung des Gemisches der Monomeren in Lösung in einer Reaktionszone in Gegenwart von radikalisch zerfallenden, monomerlöslichen, eine Azogruppierung enthaltenden Initiatoren bei erhöhter Temperatur, erhöhtem Druck und unter Rühren, dadurch gekennzeichnet, daß $\alpha$-Methylstyrol als Monovinylaromat unter solchen Bedingungen mit Initiatoren umgesetzt wird, daß die Halbwertszeit des radikalischen Zerfalls der Initiatoren $<30$ Minuten ist und die Copolymerisate 65 bis 77 Gew.-% $\alpha$-Methylstyroleinheiten und 35 bis 23 Gew.-% Acrylnitrileinheiten enthalten und wobei die Polymerisation bis zu Umsätzen von 50 bis 60% geführt wird.

2. Verfahren nach Anspruch 1, dadurch gekennzeichnet, daß die Initiatoren in Mengen von 0,01 bis 0,3%, bezogen auf Monomere, angewendet werden.

3. Verfahren nach Anspruch 1, dadurch gekennzeichnet, daß als Initiator Azodiisobutyronitril bei Temperaturen oberhalb von 110° C angewendet wird.

4. Verfahren nach Anspruch 1, dadurch gekennzeichnet, daß während der Umsetzung zusätzlich bekannte Hilfsmittel in üblichen und wirksamen Mengen angewendet werden.

**Claims**

1. A process for the continuous preparation of copolymers containing monovinyl-aromatics and acrylonitrile as the essential monomers, by reacting the mixture of the monomers in solution, at elevated temperature and superatmospheric pressure, with stirring, in a reaction zone in the presence of a monomer-soluble initiator which contains azo groups and decomposes into free radicals, wherein $\alpha$-methylstyrene, as the monovinyl-aromatic, is reacted with the initiator under such conditions that the half-life of the decomposition of the initiator into free radicals is $<30$ minutes, and the copolymers contain from 65 to 77% by weight of $\alpha$-methylstyrene units and from 35 to 23% by weight of acrylonitrile units, the polymerization being carried out up to a conversion of 50 to 60%.

2. A process as claimed in claim 1, wherein the initiator is used in an amount of from 0.01 to 0.3%, based on monomers.

3. A process as claimed in claim 1, wherein azodiisobutyronitrile is employed as the initiator, at above 110° C.

4. A process as claimed in claim 1, wherein conventional assistants are additionally employed in the reaction in customary, effective amounts.

**Revendications**

1. Procédé pour la préparation en continu de copolymères, contenant comme monomères essentiels des composés monovinyl-aromatiques et du nitrile acrylique, par réaction du mélange des monomères en solution dans une zone de réaction, sous agitation et à température et pression accrues en présence d'initiateurs contenant un groupement azo solubles dans les monomères et se décomposant avec formation de radicaux libres, caractérisé en ce que la réaction de l'alpha-méthyl-styrène choisi comme composé monovinyl-aromatique et des initiateurs est réalisée dans des conditions telles que la demi-durée de la décomposition en radicaux des initiateurs est inférieure à 30 minutes, que les polymères sont constitués à raison de 65 à 77% en poids d'unités alpha-méthylèstyrène et à raison de 35 à 23% en poids d'unités acrylonitrile et que la polymérisation est poursuivie jusqu'à des taux de conversion de 50 à 60%.

2. Procédé suivant la revendication 1, caractérisé en ce que les initiateurs sont mis en oeuvre à raison de 0,01 à 0,3% du poids des monomères.

3. Procédé suivant la revendication 1, caractérisé en ce que l'initiateur est l'azodiisobutyronitrile et la température réactionnelle supérieure à 110°C.

4. Procédé suivant la revendication 1, caractérisé en ce que, pendant la réaction, on incorpore des additifs usuels en des proportions habituelles efficaces.